# FASCICULE DE BREVET EUROPEEN

(11) **EP 1 426 227 B1**
(45) Date de publication et mention de la délivrance du brevet: **28.03.2007**
(21) Numéro de dépôt: 03356176.2
(22) Date de dépôt: 14.11.2003
(51) Int. Cl.: B60K 20/02

(54) **Dispositif de montage d'un ressort de rappel d'un organe de sélection accouplé à un levier de commande d'une boite de vitesse pour véhicules automobiles**
Einbauvorrichtung einer Rückholfeder für einen Schalthebel eines Kraftfahrzeuges
Mounting device for a return spring for a vehicle gearshift lever

(30) Priorité: 03.12.2002 FR 0215397
(43) Date de publication de la demande: 09.06.2004
(73) Titulaire: Dura Automotive Systems, 91924 Bondoufle (FR)
(72) Inventeur: Pradier, Philippe, 42390 Sorbiers (FR)
(74) Mandataire: Thivillier, Patrick

(56) Documents cités:
- US-A- 4 458 549
- PATENT ABSTRACTS OF JAPAN vol. 009, no. 299 (P-408), 27 novembre 1985 (1985-11-27) & JP 60 134922 A (TOYOTA JIDOSHA KK), 18 juillet 1985 (1985-07-18)

## Description

L'invention se rattache au secteur technique des équipements pour véhicules automobiles et plus particulièrement à la commande de sélection des boîtes de vitesses, notamment mécaniques.

Un dispositif de montage d'un ressort de rappel d'un organe de sélection conformément au préambule de la revendication 1 est connu de JP-60134922.

Pour rappel, et pour une meilleure compréhension de la suite de la description, la commande de sélection et de passage des vitesses s'effectue au moyen d'un levier monté avec capacité de déplacement angulaire dans un boîtier support fixé généralement au niveau de l'habitacle du véhicule automobile. L'extrémité inférieure du levier présente des agencements pour assurer, en combinaison avec généralement des organes de renvoi, la sélection et le passage des vitesses.
Par exemple, l'élément de renvoi et de sélection, assujetti au levier de commande, est monté avec capacité d'articulation par rapport à un axe. L'axe est équipé d'un organe apte à assurer le rappel de l'élément de sélection. Généralement, cet organe de rappel est constitué par un ressort en épingle monté, d'une manière précontrainte, autour de l'axe. Les branches du ressort sont sollicitées séparément, sous un effet de pivotement du levier, par un ergot solidaire de l'élément de sélection coopérant avec un élément de butée fixe. Généralement, l'axe de pivotement, l'ergot et l'extrémité de l'articulation du levier constituent trois points alignés de référence.
Il en est de même lorsque la sélection est effectuée par un doigt solidaire d'une partie du levier. Dans ce cas, le ressort de rappel est monté sur un pivot.

Toutefois, des difficultés apparaissent pour l'alignement de ces trois points, au moment du montage de la boîte de vitesses notamment lors de sa liaison avec le levier de commande, par l'intermédiaire des câbles de commande de passage de sélection des vitesses.

En effet, la boîte de vitesses étant au point mort, il est nécessaire que la commande soit également livrée au point mort. Dans ce but, d'une manière parfaitement connue, on utilise un élément de blocage connu sous le nom « d'outil de méthode » dont le but est de supprimer temporairement la fonction de sélection du levier. Le but recherché est d'obtenir la meilleure synchronisation possible entre le point mort du levier de commande et la boîte de vitesses. Ce résultat est obtenu par un réglage en longueur notamment du câble de sélection, mais également par l'alignement des trois points précités.
Or, il s'est avéré que l'utilisation de l'outil de méthode, nécessaire pour supprimer temporairement la sélection, génère une contrainte au niveau de l'une des branches du ressort de rappel. Autrement dit, l'outil de méthode a tendance à contraindre le ressort et, d'une manière concomitante, provoquer le déplacement angulaire de l'élément de sélection et par conséquent le désalignement des trois points.
Il peut par conséquent en résulter un mauvais synchronisme au niveau du levier de commande de la boîte de vitesses.

L'invention s'est fixée pour but de remédier à ces inconvénients, de manière simple, sûre, efficace et rationnelle.

Le problème que se propose de résoudre l'invention est d'assurer la synchronisation de l'outil de méthode avec, notamment, le ressort de sélection afin de ne pas soumettre ce dernier à une contrainte susceptible de générer un désalignement des différents points de référence.

Pour résoudre un tel problème, il a été conçu et mis au point un dispositif de montage d'un ressort de rappel d'un organe de sélection accouplé à un levier de commande d'une boîte de vitesses pour véhicules automobiles.
Selon l'invention, le ressort de rappel est assujetti à un élément monté dans une partie support avec capacité de déplacement en translation guidé sous l'effet d'un effort exercé sur une partie du ressort de rappel, pour permettre un auto-alignement de l'élément avec un point fixe et un point mobile correspondant au déplacement du levier afin de ne pas pré-contraindre le ressort, ledit élément et ladite partie présentant des agencements complémentaires aptes à assurer le blocage en translation de l'élément après son auto-alignement.

Pour résoudre le problème posé d'assurer la liaison du ressort de rappel, l'élément est un pivot qui présente une tête pour le montage du ressort de rappel et une portée de centrage apte à être engagée dans une lumière débouchante formée dans l'épaisseur de la partie support.

Pour résoudre le problème posé d'assurer le déplacement en translation guidé du pivot, puis son blocage en position, la portée de centrage présente deux zones distinctes, à savoir une zone d'extrémité apte à être engagée librement dans la lumière avec capacité de coulissement guidé, et une zone présentant les agencements de blocage aptes à coopérer avec les agencements complémentaires que présente ladite lumière.

Avantageusement, les agencements complémentaires de blocage sont constitués par un système de dentures complémentaires.

Pour résoudre le problème posé d'obtenir un auto-alignement du pivot par rapport aux autres points de référence et son blocage dans la position requise, les deux zones sont disposées l'une au-dessus de l'autre en étant séparées et délimitées par des profilés de clipage pour permettre, dans un premier temps, sous un effet d'enfoncement partiel du pivot, le positionnement de la zone d'extrémité dans la lumière en vue du libre déplacement en translation, puis, dans un deuxième temps, après enfoncement de la totalité du pivot, l'imbrication des dentures de l'autre zone avec les dentures de ladite lumière.

Pour résoudre le problème posé de permettre l'engagement de l'axe par rapport à la lumière, la portée de centrage est fendue selon ses génératrices pour être déformable par élasticité.

Pour résoudre le problème posé d'assurer le guidage de la portée de centrage, cette dernière présente une section transversale complémentaire de celle de la lumière pour assurer son indexation angulaire.

Avantageusement, le ressort présente deux branches coopérant avec le point fixe et le point mobile et aptes à contraindre l'une ou l'autre desdites branches sous un effet de déplacement angulaire du levier.

A noter que la partie support est relative à un boîtier recevant le levier de commande, ou bien la partie support est relative à l'organe de sélection.

L'invention est exposée ci-après plus en détail à l'aide des figures des dessins annexés dans lesquels :
- la figure 1 est une vue en perspective, à caractère schématique, d'un exemple de réalisation du boîtier dont le levier de commande de boîte de vitesses est équipé pour bloquer la sélection de l'outil de méthode ;

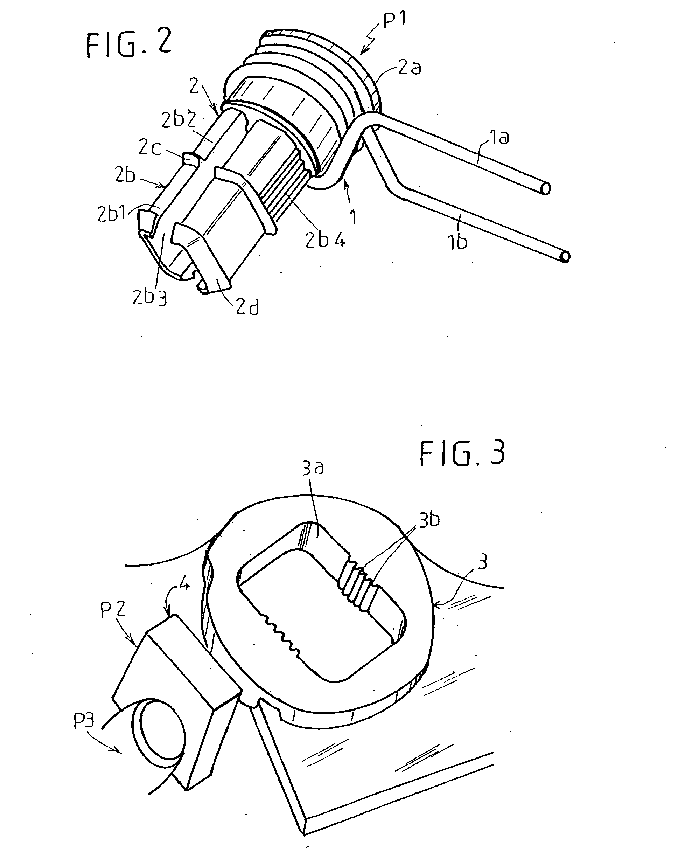

- la figure 2 est une vue en perspective de l'axe ou pivot recevant le ressort de sélection ;
- la figure 3 est une vue partielle en perspective de la partie support conformée pour recevoir le pivot du ressort de sélection, selon les caractéristiques de l' invention ;
- la figure 4 est une vue partielle en perspective montrant le pré-montage du pivot pour son réglage automatique en translation et auto-alignement avec les autres points de référence du mécanisme, sous l'effet de la mise en place de l'outil de méthode ;
- la figure 5 est une vue correspondant à la figure 4 montrant le blocage en position du pivot ;
- la figure 6 est une vue en coupe considérée selon la ligne 6-6 de la figure 4 ;
- la figure 7 est une vue en coupe considérée selon la ligne 7-7 de la figure 5.

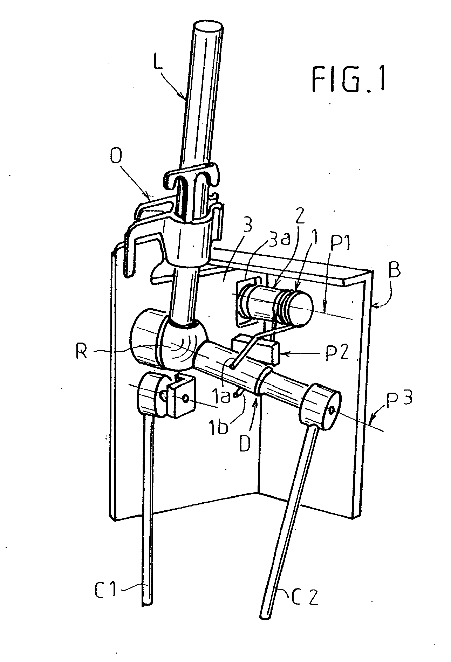

La figure 1 montre un exemple de boîtier (B) de boîte de vitesses recevant, avec capacité d'articulation, un levier de commande (L) pour le passage et la sélection des vitesses au moyen de câbles (C1) et (C2). D'une manière connue, la sélection des vitesses, en agissant sur le levier (L), peut être effectuée soit par l'intermédiaire d'un élément de renvoi et de sélection accouplé au levier et au câble (C2), soit, comme c'est le cas selon les exemples des figures des dessins, par un doigt de sélection (D) solidaire, par exemple, de la rotule d'articulation (R) du levier par rapport au boîtier (B).

Le rappel en position du levier, pour la sélection des vitesses, s'effectue au moyen d'un ressort (1). On rappelle qu'après réglage de la boîte de la vitesses par rapport au point mort (au niveau de la commande et de la boîte de vitesses), le ressort de rappel (1) coopère avec les deux points fixes (P1) et (P2) et un point mobile (P3) correspondant au déplacement angulaire du pied de levier (L) lors de sa manoeuvre.

Selon l'invention, le ressort de rappel (1) est assujetti à au moins un élément (2) monté avec capacité de déplacement en translation guidée sous l'effet d'un effort exercé sur une partie dudit ressort, notamment lors de la mise en place de l'outil de méthode (0) (figure 1). La capacité de déplacement en translation permet un auto-alignement de l'élément(2) avec les points fixes (P1) - (P2), et le point mobile (P3), afin de ne pas contraindre le ressort (1). En outre, comme il sera indiqué dans la suite de la description, l'élément (2) et la partie le recevant, présentent des agencements complémentaires aptes à assurer son blocage en translation après auto-alignement.

Dans l'exemple illustré, l'élément (qui constitue le point fixe (P1)) est constitué par un axe ou pivot (2) qui présente une tête (2a) pour le montage du ressort de rappel (1) qui est enroulé autour de ladite tête (2a) permettant le croisement et le débordement de deux branches rectilignes et parallèles (1a) et (1b). La tête (2a) est prolongée par une portée de centrage (2b) apte à être engagée dans une lumière débouchante (3a) formée dans l'épaisseur, soit d'un élément de renvoi et de sélection, soit d'une partie (3) du boîtier (B).
Cette portée de centrage (2b) présente deux zones distinctes (2b1) et (2b2). L'ensemble de la portée de centrage (2b) est fendue selon ses génératrices en (2b3) pour être déformable par élasticité. La zone d'extrémité (2b1) est conformée pour être engagée librement dans la lumière (3a) de la partie (3) avec capacité de coulissement guidé. L'autre zone (2b2) présente des agencements de blocage (2b4) aptes à coopérer avec des agencements complémentaires (3b) que présentent les parties rectilignes parallèles et opposées de la lumière (3a). Les deux zones (2b1) et (2b2) sont séparées par un profil de clipage (2c). De même, l'extrémité libre de la zone (2b1) est terminée par un profil de clipage (2d).

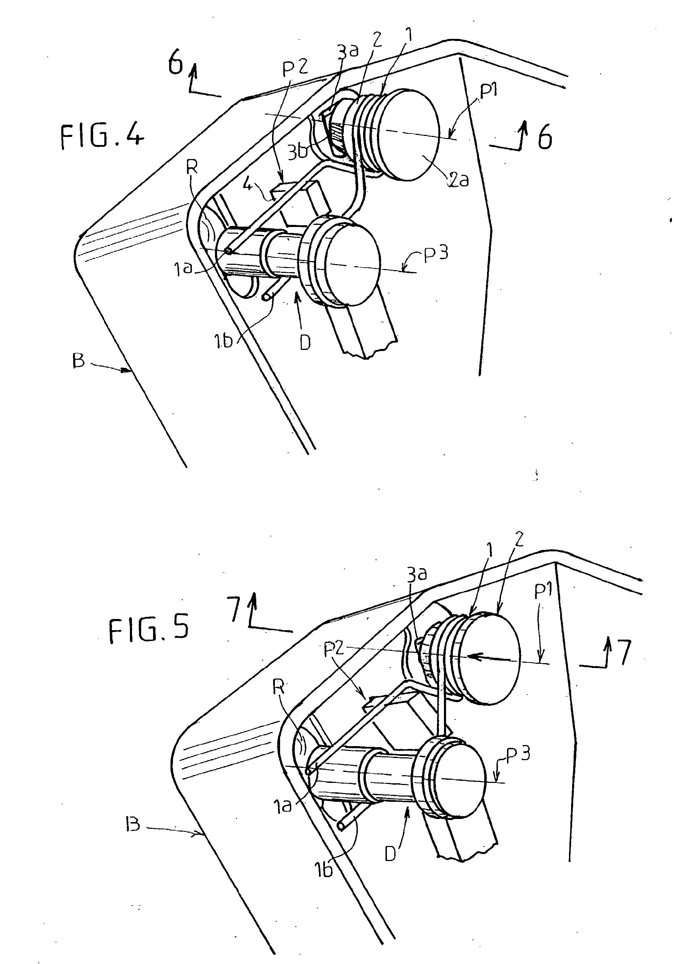

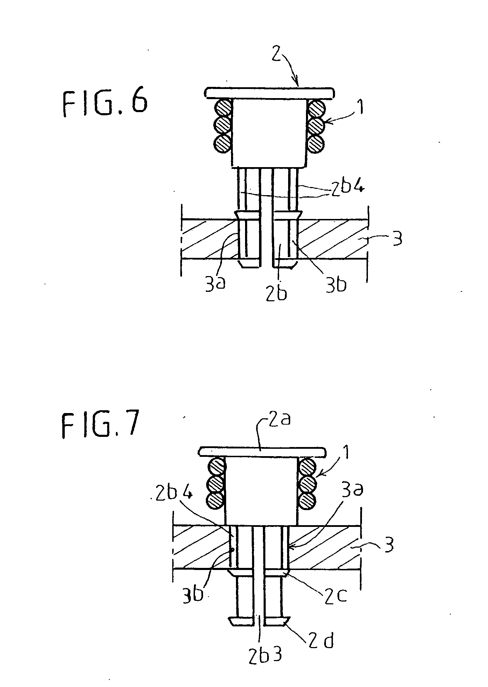

Les deux zones (2b1) et (2b2) sont disposées l'une au-dessus de l'autre pour permettre, dans un premier temps, sous un enfoncement partiel du pivot (2), le positionnement de la zone d'extrémité (2b1), par clipage, dans la lumière (3a), en butée contre le profil de clipage (2c). Dans cette position d'engagement de la zone d'extrémité (2b1), le pivot l'axe (2) peut être déplacé en translation (figure 4). Dans un deuxième temps, après enfoncement de la totalité du pivot (2), la partie (2b2) de la portée (2b), se trouve dans la lumière (3a), en position d'imbrication des dentures complémentaires (2b4) (3b). Cette position correspond à un blocage en translation de l'axe (2) (figure 5).

Compte tenu des caractéristiques à la base de l'invention, on obtient, lors du blocage de la sélection pour le réglage du point mort, un auto-alignement des trois points (P1), (P2) et (P3). Dans l'exemple illustré, le point (P1) est constitué par le pivot (2), le point fixe (P2) par une butée (4), solidaire par exemple d'une partie du boîtier, et le point mobile (P3) par l'extrémité du levier d'articulation (L), ou le doigt de sélection (D).

Le pivot (2) est engagé dans la lumière (3a) par l'extrémité (2b1). Les deux branches (1a) et (1b) du ressort de rappel (1) sont disposées en appui, de part et d'autre de l'élément de butée fixe (4), et du doigt de sélection (D). La mise en place de l'outil de méthode (O) sur le levier (L) en vue de bloquer temporairement la sélection, peut créer une contrainte au niveau notamment de l'une des branches (1a) ou (1b) du ressort (1) provoquant, d'une manière concomitante, le déplacement en translation limitée du pivot (2) et, par conséquent, l'auto-alignement des points (P1), (P2) et (P3) (figures 4 et 6). Il suffit ensuite d'enfoncer complètement le pivot (2) de manière à mettre en prise, en position d'engrènement, les dentures (2b4) de la portée (2b2) et (3b) de la lumière (3a) assurant ainsi le blocage en translation du pivot (2). On peut ensuite régler en longueur, d'une manière parfaitement connue, le câble de sélection (C2)

Bien évidemment, sans pour cela sortir du cadre de l'invention, les mêmes résultats sont obtenus lorsque l'élément de butée (4) est monté avec capacité de mobilité en translation et de blocage en position, dans les conditions indiquées précédemment. Dans ce cas, l'axe ou pivot (2), où est enroulé le ressort, est fixe.

Les avantages ressortent bien de la description.

## Revendications

1. Dispositif de montage d'un ressort de rappel (1) d'un organe de sélection accouplé à un levier de commande d'une boîte de vitesses pour véhicules automobiles,
**caractérisé en ce que** le ressort de rappel (1) est assujetti à un élément (2) monté dans une partie support (3) avec capacité de déplacement en translation guidé sous l'effet d'un effort exercé sur une partie du ressort de rappel (1), pour permettre un auto-alignement de l'élément (2) avec un point fixe (P2) et un point mobile (P3) correspondant au déplacement du levier afin de ne pas pré-contraindre le ressort (1) pour obtenir une synchronisation entre un outil de méthode (o), apte à supprimer temporairement la fonction de sélection dudit levier, et ledit ressort, ledit élément (2) et ladite partie (3) présentant des agencements complémentaires aptes à assurer le blocage en translation de l'élément (2) après son auto-alignement.

2. Dispositif selon la revendication 1, **caractérisé en ce que** l'élément (2) est un pivot qui présente une tête (2a) pour le montage du ressort de rappel (1) et une portée de centrage (2b) apte à être engagée dans une lumière débouchante (3a) formée dans l'épaisseur de la partie support (3).

3. Dispositif selon la revendication 2, **caractérisé en ce que** la portée de centrage (2b) présente deux zones distinctes, à savoir une zone d'extrémité (2b1) apte à être engagée librement dans la lumière (3a) avec capacité de coulissement guidé, et une zone (2b2)présentant les agencements de blocage aptes à coopérer avec les agencements complémentaires que présente ladite lumière.

4. Dispositif selon la revendication 3, **caractérisé en ce que** les agencements complémentaires de blocage sont constitués par un système de dentures complémentaires (2b4) et (3b).

5. Dispositif selon la revendication 3, **caractérisé en ce que** les deux zones (2b1) et (2b2) sont disposées l'une au-dessus de l'autre en étant séparées et délimitées par des profilés de clipage (2c) et (2d) pour permettre, dans un premier temps, sous un effet d'enfoncement partiel du pivot (2), le positionnement de la zone d'extrémité (2b1) dans la lumière (3a) en vue du libre déplacement en translation, puis, dans un deuxième temps, après enfoncement de la totalité du pivot (2), l'imbrication de la denture (2b4) de l'autre zone (2b2) avec la denture (3b) de ladite lumière (3a).

6. Dispositif selon la revendication 2, **caractérisé en ce que** la portée de centrage (2b) est fendue selon ses génératrices pour être déformable par élasticité.

7. Dispositif selon la revendication 2, **caractérisé en ce que** la portée de centrage (2b) présente une section transversale complémentaire de celle de la lumière (3a) pour assurer son indexation angulaire.

8. Dispositif selon la revendication 1, **caractérisé en ce que** le ressort (1) présente deux branches (1a) et (1b) coopérant avec le point fixe et le point mobile aptes à contraindre l'une ou l'autre desdites branches sous un effet de déplacement angulaire du levier.

9. Dispositif selon la revendication 1, **caractérisé en ce que** la partie support (3) est relative à un boîtier recevant le levier de commande.

10. Dispositif selon la revendication 1, **caractérisé en ce que** la partie support (3) est relative à l'organe de sélection.

## Claims

1. A device for fitting a return spring (1) of a selecting mechanism linked to a control lever of a gearbox for motor vehicles,
**characterised in that** return spring (1) is slaved to a component (2) mounted in a support (3) capable of translational movement guided by the effect of a force exerted on part of return spring (1) in order to allow self-alignment of component (2) with a fixed point (P2) and a moving point (P3) corresponding to displacement of the lever in order not to prestress spring (1) in order to obtain synchronisation between a locking tool (O) capable of temporarily defeating the selection function of said lever and said spring, said component (2) and said part (3) having matching features capable of ensuring translational locking of component (2) after it has aligned itself.

2. A device as claimed in claim 1, **characterised in that** component (2) is a pivot that has a head (2a) for fitting return spring (1) and a centring bearing surface (2b) capable of being fitted into a through-slot (3a) formed in the thickness of support (3).

3. A device as claimed in claim 2, **characterised in that** centring bearing surface (2b) has two separate areas, namely an end area (2b1) capable of being fitted freely into slot (3a) with the ability to be guided and slide, and an area (2b2) having locking features capable of cooperating with matching features that said slot has.

4. A device as claimed in claim 3, **characterised in that** the matching locking features consist of a system of matching gear teeth (2b4) and (3b).

5. A device as claimed in claim 3, **characterised in that** the two areas (2b1) and (2b2) are arranged one above each other and are separated and bounded by clip-fastening profiles (2c) and (2d) in order to allow, initially due to the effect of partial depression of pivot (2), positioning of end area (2b1) in slot (3a) with a view to making translation movement freely, then, in second stage, after full depression of pivot (2), meshing of gear teeth (2b4) of upper zone (2b2) with gear teeth (3b) of said slot (3a).

6. A device as claimed in claim 2, **characterised in that** centring bearing surface (2b) is split along its generating lines to make it elastically deformable.

7. A device as claimed in claim 2, **characterised in that** centring bearing surface (2b) has a transverse cross-section that matches that of slot (3a) in order to ensure angular indexing.

8. A device as claimed in claim 1, **characterised in that** spring (1) has two legs (1a) and (1b) cooperating with the fixed point and the moving point capable of restraining one or other of said legs due to the effect of angular displacement of the lever.

9. A device as claimed in claim 1, **characterised in that** support (3) relates to a housing that accommodates the control lever.

10. A device as claimed in claim 1, **characterised in that** support (3) relates to the selecting mechanism.

## Patentansprüche

1. Vorrichtung zum Einbau einer Rückholfeder (1) eines Auswahlorgans, das mit einem Steuerhebel eines Schaltgetriebes für Kraftfahrzeuge gekoppelt ist,
**dadurch gekennzeichnet, dass** die Rückholfeder (1) von einem Element (2) abhängig ist, das in ein Trägerteil (3) mit der Fähigkeit der geführten Translationsverschiebung unter der Wirkung einer auf einen Teil der Rückholfeder (1) ausgeübten Kraft eingesetzt ist, um eine Selbstausrichtung des Elements (2) mit einem ortsfesten Punkt (P2) und einem beweglichen Punkt (P3) entsprechend der Verschiebung des Hebels zu erlauben, damit die Feder (1) nicht vorgespannt wird, um eine Synchronisation zwischen einem Verfahrenswerkzeug (o), das die Auswahlfunktion des Hebels kurzfristig unterdrücken kann, und der Feder zu erhalten, wobei das Element (2) und das Teil (3) komplementäre Anordnungen aufweisen, die die Blockierung des Elements (2) in Translationsrichtung nach seiner Selbstausrichtung gewährleisten können.

2. Vorrichtung nach Anspruch 1, **dadurch gekennzeichnet, dass** das Element (2) ein Drehzapfen ist, der einen Kopf (2a) für den Einbau der Rückholfeder (1) und eine Zentrierfläche (2b) aufweist, die in eine Mündungsöffnung (3a) eingeführt werden kann, die in der Stärke des Trägerteils (3) ausgebildet ist.

3. Vorrichtung nach Anspruch 2, **dadurch gekennzeichnet, dass** die Zentrierfläche (2b) zwei unterschiedliche Zonen aufweist, nämlich eine Endzone (2b1), die frei in die Öffnung (3a) mit der Fähigkeit des geführten Gleitens eingeführt werden kann, und eine Zone (2b2), die die Blockieranordnungen aufweist, die mit den komplementären Anordnungen zusammenwirken können, die die Öffnung aufweist.

4. Vorrichtung nach Anspruch 3, **dadurch gekennzeichnet, dass** die zusätzlichen Blockieranordnungen aus einem System von komplementären Zahnungen (2b4) und (3b) bestehen.

5. Vorrichtung nach Anspruch 3, **dadurch gekennzeichnet, dass** die zwei Zonen (2b1) und (2b2) übereinander angeordnet und durch Einklick-Profilteile (2c) und (2d) getrennt und begrenzt sind, um zunächst unter der Wirkung des teilweisen Eindrückens des Drehzapfens (2) die Positionierung der Endzone (2b1) in der Öffnung (3a) zum Zweck der freien Translationsverschiebung und dann, nach dem Eindrücken des gesamten Drehzapfens (2), das Ineinandergreifen der Zahnung (2b4) der anderen Zone (2b2) mit der Zahnung (3b) der Öffnung (3a) zu erlauben.

6. Vorrichtung nach Anspruch 2, **dadurch gekennzeichnet, dass** die Zentrierfläche (2b) gemäß ihren Mantellinien geschlitzt ist, um durch Elastizität verformbar zu sein.

7. Vorrichtung nach Anspruch 2, **dadurch gekennzeichnet, dass** die Zentrierfläche (2b) einen Querschnitt aufweist, der komplementär zu demjenigen der Öffnung (3a) ist, um ihre Winkelindexierung zu gewährleisten.

8. Vorrichtung nach Anspruch 1, **dadurch gekennzeichnet, dass** die Feder (1) zwei Schenkel (1a) und (1b) aufweist, die mit dem ortsfesten und dem beweglichen Punkt zusammenwirken, die den einen oder den anderen der Schenkel unter Einwirkung einer Winkelverschiebung des Hebels spannen können.

9. Vorrichtung nach Anspruch 1, **dadurch gekennzeichnet, dass** das Trägerteil (3) sich auf ein Gehäuse bezieht, das den Steuerhebel aufnimmt.

10. Vorrichtung nach Anspruch 1, **dadurch gekennzeichnet, dass** das Trägerteil (3) sich auf das Auswahlorgan bezieht.
